# EUROPEAN PATENT APPLICATION

(11) **EP 4 570 434 A1**
(43) Date of publication of application: **18.06.2025**
(21) Application number: 23865475.0
(22) Date of filing: 11.09.2023
(51) Int. Cl.: B25B 27/14, B23P 19/06

(54) **INSERT INSERTING TOOL AND CONTROL METHOD FOR INSERT INSERTING TOOL**

(30) Priority: 15.09.2022 JP 2022147371; 28.08.2023 JP 2023138148
(71) Applicant: Sanyu Seiki Corporation, Tokyo 169-0074 (JP)
(72) Inventor: GOTO Tamaki, Tokyo 169-0074 (JP); WAKAI Makoto, Tsuru-shi, Yamanashi 402-0004 (JP)
(74) Representative: Grünecker Patent- und Rechtsanwälte PartG mbB
(86) International application number: PCT/JP2023/033040
(87) International publication number: WO 2024/058122

(57) **Abstract**

There are provided an insert inserting tool and a control method for the insert inserting tool, which can prevent scratches such as abrasions on a workpiece when an insert is inserted into the workpiece and can homogeneously and efficiently insert the insert into the workpiece even in a case where a large number of inserts having different types are inserted. A mandrel (23) on which an insert is mounted, an input device (11) configured to input a signal of start of rotation of the mandrel (23) when the insert is inserted into the workpiece, and a control device (16) configured to control the rotation of the mandrel (23) are provided. When the insert is inserted into the workpiece, the control device (16) performs control such that the insert is inserted into a workpiece W without bringing a portion of an insertion unit (20) including the mandrel (23) into contact with the workpiece W.

## Description

### Technical Field

Embodiments of the present invention relate to an insert inserting tool and a control method for the insert inserting tool.

### Background Art

In general, in a case where a strong female screw is required, for example, in a case where durability of a female screw is required or in a case where strong tightening is needed, an insert called a coil insert, a screw insert, or the like is used. The insert is formed by winding a wire such as stainless steel in a coil shape, and is screwed and inserted (embedded) into a tapped hole (screw hole) of a workpiece such as a resin or an aluminum alloy by an insert inserting tool.

So far, a user has manually rotated the insert inserting tool to insert the insert into the tapped hole. However, in a case where there are a large number of tapped holes formed in the workpiece, the number of inserts screwed into the tapped holes is also large.

Then, in some cases, the number of inserts to be screwed by the workpiece exceeds 100, and screwing all of the inserts by handwork of the operator is very laborious. In order to avoid such inconvenience, in recent years, an attachment tool for screwing an insert into a tapped hole has been electrified to reduce the labor of an operator.

PTL 1 described below discloses a screw insert automatic insertion device that is capable of automatically and reliably inserting a screw insert into a female screw of a workpiece instead of a manual operation by a user as described above and is compact.

### Citation List

### Patent Literature

PTL 1: JP H 11-028679 A

### Summary of Invention

### Technical Problem

As disclosed in PTL 1, even in a case where the insert inserting tool for inserting the insert into the workpiece is automated, after the insert is inserted into the tapped hole, it is necessary to pull up the insert inserting tool from the tapped hole in a state in which the insert remains in the tapped hole.

Regarding a timing of pulling up the insert inserting tool, control is performed such that a change in torque of a driving force when a member called a color, for example, that is disposed around a mandrel comes into contact with the workpiece, is detected, and the insert inserting tool is pulled up by reversing the rotation of the mandrel.

However, in this method, the insert inserting tool and the workpiece may come into contact with each other, which may cause scratches on the workpiece to some extent. It is also conceivable that the scratch is not a scratch that is very noticeable, such as an abrasion, but in some industries, it may be prohibited to make any scratches on a workpiece.

In a field where an insert is inserted into a workpiece, compliance of the above-described instruction is needed, and thus, for example, an operator visually confirms an insertion state of the insert into the workpiece and pulls up the insert inserting tool.

However, in this method, the operator needs to carefully turn the insert inserting tool ON and OFF and to pay attention to prevent the insert inserting tool from coming into contact with a surface of the workpiece. In addition, even though work is performed with great care, scratches may be made, or the insertion state may vary depending on the operator. Therefore, a lot of experience is required to uniformly insert the insert. In addition, particularly in a case where a large number of inserts need to be inserted into the workpiece as described above, the efficiency cannot be said to be high.

The present invention provides an insert inserting tool and a control method for the insert inserting tool, which can prevent scratches such as abrasions on a workpiece when an insert is inserted into the workpiece and can homogeneously and efficiently insert the insert into the workpiece even in a case where a large number of inserts having different types are inserted.

### Solution to Problem

According to an embodiment of the present invention, an insert inserting tool includes a mandrel on which an insert is mounted, an input device configured to input a signal of start of rotation of the mandrel when the insert is inserted into a workpiece, and a control device configured to control the rotation of the mandrel. The control device performs control such that the insert is inserted into the workpiece without bringing a portion of an insertion unit including the mandrel into contact with the workpiece, when the insert is inserted into the workpiece.

In a case where a time when the signal of the start of the rotation of the mandrel is received from the input device is set as an insertion start time when the insert is inserted into the workpiece, the control device ends an insertion operation of the insert into the workpiece when an insertion time from the insertion start time set in advance in accordance with a type of the insert to be inserted into the workpiece has elapsed.

In the embodiment of the present invention, the insert inserting tool further includes a time measuring device. The control device performs control such that the rotation of the mandrel is reversed based on a notification signal for informing of elapse of the insertion time by which the time measuring device starts measurement from the insertion start time.

In the insert inserting tool in the embodiment of the present invention, the insertion time is calculated by a rotation speed of the insert inserting tool and an insertion distance into the workpiece of the insert to be inserted into the workpiece, and is stored in advance in a storage device for each type of the insert.

In a case where a contact position of one end portion of the insert with the workpiece is set as a reference position, when the insert is inserted into the workpiece, the control device acquires a detection signal from a detection sensor configured to detect a distance by which the insert is inserted into the workpiece from the reference position, and ends an insertion operation of the insert into the workpiece in a case where it is determined that the distance reaches an insertion distance set in advance.

The control device performs control to reverse the rotation of the mandrel in a case where it is determined that the insert is inserted into the workpiece from the reference position up to the insertion distance set in advance, based on the detection signal from the detection sensor.

According to the embodiment of the present invention, a control method for an insert inserting tool includes mounting an insert on an insert inserting tool and inserting the mounted insert into a workpiece. When the insert is inserted into the workpiece, a control is performed such that the insert is inserted into the workpiece without bringing a portion of an insertion unit including the mandrel into contact with the workpiece.

In a case where a time when a signal of the start of the rotation of the mandrel is received from the input device is set as an insertion start time when the insert is inserted into the workpiece, an insertion of the insert into the workpiece is ended when an insertion time from the insertion start time set in advance in accordance with the type of the insert to be inserted into the workpiece has elapsed.

In the embodiment of the present invention, in the control method for an insert inserting tool, in a case where the elapse of the insertion time is confirmed, insertion into the workpiece is ended by reversing the mandrel of the insert inserting tool, and the insert inserting tool is pulled up from the workpiece.

In a case where a contact position of one end portion of the insert with the workpiece is set as a reference position when the insert is inserted into the workpiece, a detection signal from a detection sensor configured to detect a distance by which the insert is inserted into the workpiece from the reference position is acquired, and an insertion operation of the insert into the workpiece is ended, in a case where it is determined that the distance reaches an insertion distance set in advance.

In a case where it is determined that the insert is inserted into the workpiece from the reference position up to the insertion distance set in advance, based on the detection signal from the detection sensor, insertion into the workpiece is ended by reversing the rotation of the mandrel, and the insert inserting tool is pulled up from the workpiece by the insertion distance set in advance.

### Advantageous Effects of Invention

According to the insert inserting tool and the control method for the insert inserting tool in the embodiment of the present invention described above, it is possible to prevent scratches such as abrasions on a workpiece when an insert is inserted into the workpiece and to homogeneously and efficiently insert the insert into the workpiece even in a case where a large number of inserts having different types are inserted.

### Brief Description of Drawings

FIG. 1 is a schematic view illustrating an overall configuration of an insert inserting tool according to a first embodiment of the present invention;
FIG. 2 is a block diagram illustrating a configuration of the insert inserting tool according to the first embodiment of the present invention;
FIG. 3 is a flowchart illustrating a flow of insertion of an insert into a workpiece using the insert inserting tool according to the first embodiment of the present invention;
FIG. 4 is a schematic view illustrating an overall configuration of an insert insertion apparatus including an insert inserting tool according to a second embodiment of the present invention;
FIG. 5 is a block diagram illustrating a configuration of the insert inserting tool according to the second embodiment of the present invention;
FIG. 6 is an explanatory view illustrating an enlarged view of an insertion unit including a mandrel of the insert inserting tool according to the second embodiment of the present invention and a portion of a workpiece;
FIG. 7 is a flowchart illustrating a flow of insertion of an insert into the workpiece using the insert inserting tool according to the second embodiment of the present invention;
FIG. 8 is an explanatory view illustrating a state in which the insert inserting tool inserts the insert into the workpiece (tapped hole) by a set distance in the second embodiment of the present invention; and
FIG. 9 is an explanatory view illustrating a state in which the insert inserting tool is separated from the workpiece and rotation of the mandrel is stopped, in the second embodiment of the present invention.

### Description of Embodiments

### (First Embodiment)

Hereinafter, embodiments of the present invention will be described in detail with reference to the drawings.

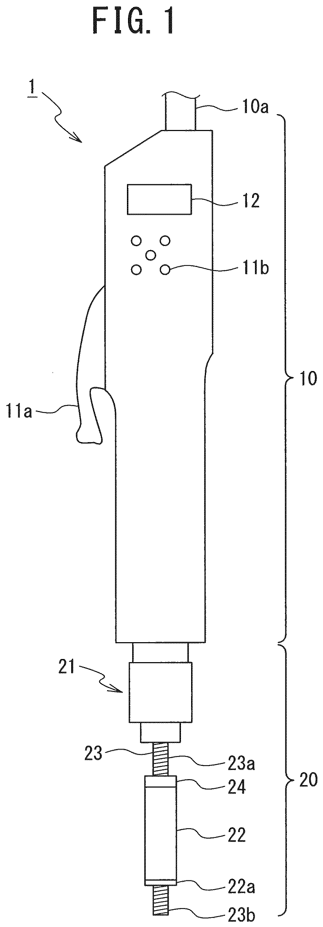

FIG. 1 is a schematic view illustrating an overall configuration of an insert inserting tool 1 according to a first embodiment of the present invention. The insert inserting tool 1 is a tool used for inserting an insert (none of which are illustrated in FIG. 1) into a workpiece.

Note that the insert inserting tool 1 used in the embodiment of the present invention is driven based on power and the operator does not insert an insert into a workpiece. Note that, as long as the driving is performed based on the power, it does not matter what is used as the power source, such as an electric type or an engine type.

In addition, the insert inserting tool 1 in the embodiment of the present invention has a long shape in an up-down direction in FIG. 1, and is premised on being used by being gripped by a user. However, in addition to a case where the user uses the insert inserting tool 1 by himself/herself, for example, a case where an insert insertion apparatus is used to automatically insert an insert into a workpiece without the user touching the apparatus may be used.

Furthermore, as described above, the insert to be inserted into the workpiece by the insert inserting tool 1 is formed by winding a wire (for example, stainless steel is used) having a rhombic cross-sectional shape in a coil shape. The outer peripheral surface of the insert functions as an outer screw, and the inner peripheral surface of the insert functions as an inner screw.

In addition, as the type of the insert, there are an insert with a tang and a tang-less insert. A tang that is bent in a radial direction of the coil is formed at one end portion of the former, for example. In a case where the insert with a tang is inserted into the tapped hole, the user uses the insert inserting tool to pinch the tang with the tip portion of the insert inserting tool, to hook the tip portion of the insert inserting tool on the tang, or to rotate the insert via the tang and screw the insert into the tapped hole.

On the other hand, the tang is not provided in the tang-less insert, and instead, notches (cutout portions) are formed at both end portions of the insert. Therefore, in the insertion, the insert is fixed to a mandrel by hooking a claw provided on the mandrel to the notch, and the insert is inserted into the workpiece by rotating the insert in accordance with the rotation of the mandrel.

As described above, there are inserts having two major shapes. The type of insert to be inserted into a workpiece by using the insert inserting tool 1 in the embodiment of the present invention may be an insert with a tang or a tang-less insert.

Then, a target into which the insert is inserted is a workpiece. A tapped hole into which an insert is inserted is formed in the workpiece in advance. The tapped hole is formed to have a diameter slightly smaller than the diameter of the insert in accordance with the size of the insert to be inserted. Then, the insert is screwed into the tapped hole by using the insert inserting tool 1.

The insert inserting tool 1 is configured with a body unit 10 and an insertion unit 20. When an insert is inserted, the body unit 10 is gripped by the user through a surface of the body unit, and each device or mechanism is stored in the body unit. On the other hand, the insertion unit 20 is used to insert the mounted insert into the tapped hole of the workpiece.

The body unit 10 is formed in a substantially cylindrical shape, and is a portion that grips the insert inserting tool 1 when the user inserts the insert into the workpiece. Since the body unit 10 is formed in such a shape, the insert inserting tool 1 can be firmly gripped when the insert is inserted into the workpiece, and it is possible to prevent the insert inserting tool 1 from being rattled when the insert is inserted into the tapped hole.

An input device 11 is provided in the body unit 10. In the case of the insert inserting tool 1 in the embodiment of the present invention, the input device 11 is divided into a first input device 11a and a second input device 11b. The first input device 11a is formed in a lever shape and is provided to protrude outward from the body unit 10 at a substantially central portion of the body unit 10.

The first input device 11a serves as a switch that starts the rotation of a mandrel which will be described later, when the user inserts the insert into the workpiece by using the insert inserting tool 1. That is, the user grips the body unit 10 of the insert inserting tool 1 and moves the first input device 11a to the body unit 10 side with hooking the finger, so that the switch is turned on and the rotation of the mandrel is started.

Note that, in the insert inserting tool 1 in the embodiment of the present invention, the first input device 11a is a switch that starts the rotation of the mandrel as described above. Therefore, once the user operates the first input device 11a, the mandrel continues to rotate even though the user does not continue to operate the first input device 11a, that is, even though the user does not continue to grip the first input device 11a.

Furthermore, the insert inserting tool 1 also includes the second input device 11b. As illustrated in FIG. 1, the second input device 11b is disposed in a button-like manner on the surface of the body unit 10. The user can select a function assigned to each button by pressing the button (second input device 11b).

Note that the first input device 11a is formed in a shape as illustrated in FIG. 1 in consideration of the ease of the operation of the user, but may be a lever having another shape or a switch shape instead of the lever as long as the same function is performed, and the shape of the first input device 11a is not limited.

In addition, here, the shape of the second input device 11b is the button shape as described above, but the shape may be any shape. In addition, the number and disposition position of the buttons can also be freely set according to the required functions.

In the insert inserting tool 1 in the embodiment of the present invention, a notification device 12 is provided at an upper portion of the second input device 11b. The notification device 12 can display, for example, a display related to the function selected by the second input device 11b, the number of inserts inserted into the workpiece, and the like.

In addition, the notification device 12 can also display information when information regarding the insert to be inserted is input. Further, various types of information such as the content to be notified to the user can be displayed in addition to such information.

Note that, as the notification device 12, for example, a liquid crystal display, an organic electroluminescence (EL) display, or the like can be used. Further, for example, an aspect like a lamp may be adopted instead of a screen display as illustrated in FIG. 1.

In addition, any mechanism can be adopted as long as the notification device 12 can perform a notification to appeal to the five senses of the user, such as voice or vibration, in addition to a case where the notification device 12 is a device that performs a notification to appeal to the vision of the user as illustrated in FIG. 1.

A connection portion 10a is provided at an upper portion of the insert inserting tool 1, and for example, a cord to which power for driving and controlling the insert inserting tool 1 is supplied is connected.

The insertion unit 20 is disposed at a lower portion of the body unit 10 and has a function of inserting an insert with a tang or a tang-less insert into a tapped hole of a workpiece. The insertion unit 20 includes, for example, a drive device 21, a housing 22, a mandrel 23, and a fixing member 24. Then, since the longitudinal direction of the insert inserting tool 1 is an insertion direction of the insert, the insertion unit 20 is provided to be continuous in the longitudinal direction of the body unit 10.

The drive device 21 rotates the mandrel, which will be described later, with the central axis of the insertion unit 20 as a rotation center. The drive device 21 includes, for example, a motor, a joining mechanism (none illustrated), and the like. In addition, in the case of the insert inserting tool 1 in the embodiment of the present invention, the drive device 21 is provided such that a portion of the drive device 21 is accommodated in the body unit 10.

The housing 22 is formed in a cylindrical shape (tube shape), and the mandrel 23 is inserted into the housing 22. A buffer member 22a is provided at a lower end of the housing 22, and is formed in an annular shape using, for example, a resin.

The buffer member 22a is provided to prevent scratches such as abrasions on the surface of the workpiece as much as possible even though the insertion unit 20 comes into contact with the surface of the workpiece when the insert is embedded in the tapped hole of the workpiece. A female screw (not illustrated) is formed on an inner peripheral surface of the housing 22 from the vicinity of the center to the upper end of the housing 22.

Since the upper end side of the mandrel 23 is joined to the drive device 21, the mandrel 23 is rotated by receiving a driving force from the drive device 21. On the other hand, as will be described later, an insert is mounted on the lower end side of the mandrel 23, and the lower end (tip) of the mandrel 23 is inserted into the tapped hole of the workpiece while rotating the mandrel 23, so that the insert is screwed into the tapped hole.

The mandrel 23 is formed in a columnar shape to extend in the insertion direction of the insert. A male screw 23a is formed on an outer peripheral surface of the mandrel 23 from the vicinity of the center of the mandrel 23 to the vicinity of the upper end of the mandrel 23. The male screw 23a is combined with the above-described female screw formed on the inner peripheral surface of the housing 22, and the mandrel 23 is integrally held in the housing 22.

In addition, a male screw 23b is formed on an outer peripheral surface of the mandrel 23 on a lower end side (tip side). An insert (not illustrated) is combined with the male screw 23b, and the insert is mounted on the mandrel 23. On the other hand, an upper end portion of the mandrel 23 is formed in a hexagonal bit (not illustrated) shape, and a portion of the hexagonal bit is mounted on a lower end portion of the body unit 10 (tip portion of the body unit 10).

Note that the shape of the lower end of the mandrel varies depending on whether the insert to be mounted is an insert with a tang or a tang-less insert. For example, in a case where the insertion unit 20 is an insertion tool for a tang-less insert, various members such as a pawl (not illustrated) having a hook portion (claw) are provided on the mandrel 23.

The fixing member 24 is formed to be mountable on the male screw 23a on the outer peripheral surface of the mandrel 23. That is, a female screw (not illustrated) is formed on the inner peripheral surface of the fixing member 24 from the lower end to the upper end of the fixing member 24. The fixing member 24 is combined with the male screw 23a on the outer peripheral surface of the mandrel 23 and abuts on the upper end of the housing 22 to fix the position of the housing 22 with respect to the mandrel 23. As the fixing member 24, for example, a lock nut or the like is used.

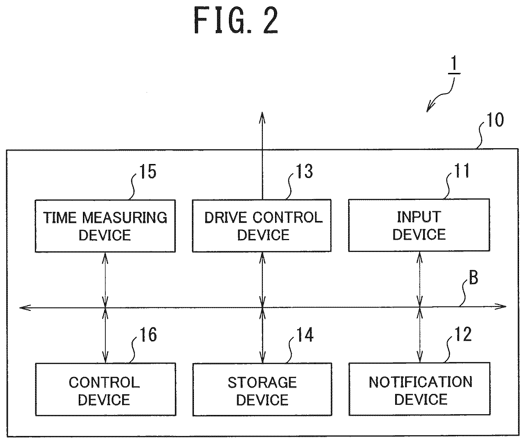

FIG. 2 is a block diagram illustrating a configuration of the insert inserting tool 1 according to the first embodiment of the present invention. In the body unit 10, the input device 11, the notification device 12, a drive control device 13, a storage device 14, a time measuring device 15, and a control device 16 are provided.

In a case of the insert inserting tool 1 in the embodiment of the present invention, the input device 11 includes the first input device 11a and the second input device 11b, and a user inputs various operations. An input signal input through the input device 11 is transmitted to the control device 16, which will be described later, via a bus B.

The notification device 12 displays various types of information such as information regarding control when the insert is inserted into the workpiece, and the number (the number of members) of inserted inserts, as described above, according to the control of the control device 16.

The drive control device 13 applies a driving force to the mandrel 23 and rotates the mandrel 23 based on an instruction from the control device 16 to screw the insert into the tapped hole of the workpiece.

The storage device 14 is configured by, for example, a semiconductor or a magnetic disk, and stores a drive program related to a control method for the insert inserting tool 1 which will be described later, information regarding the insert, and the like. In addition, the type of the insert and an insertion time for each type are stored in association with each other.

The time measuring device 15 measures a time required to rotate the mandrel 23 when the user inserts the insert into the workpiece by using the insert inserting tool 1.

The control device 16 integrally controls each portion of the insert inserting tool 1. For example, the control device 16 performs the drive control of the mandrel 23 via the drive control device 13 in accordance with the type of the insert to be inserted into the workpiece.

Note that, for example, a CPU, a ROM, and a RAM (not illustrated) are provided in the control device 16. To briefly describe the functions, the CPU is a processing device that reads out and loads a program and data stored in the RAM, the storage device 14, and the like into the RAM, and that realizes, for example, the drive control of the insert inserting tool 1, which will be described below, based on commands of the program read out from the RAM.

That is, as described above, when the insert is inserted into the workpiece, it is not preferable that the insert inserting tool 1 comes into contact with the surface of the workpiece and causes scratches such as abrasions on the surface. In the insert inserting tool 1 in the embodiment of the present invention, although the buffer member 22a is provided, even contact between the buffer member 22a and the surface of the workpiece may be prohibited.

Therefore, in a case where the user uses the insert inserting tool 1 in the embodiment of the present invention, the control device 16 controls the rotation of the mandrel 23 such that the buffer member 22a does not come into contact with the surface of the workpiece when the insert is inserted into the workpiece. However, the size and the number of turns of the insert to be inserted vary, and the time required for the insertion also varies depending on the type of the insert or the rotation speed of the mandrel 23.

Therefore, the insertion time is set in advance for each type of insert and is stored in the storage device 14, and the insert is inserted into the workpiece by using the optimum insertion time depending on the selected type of insert. By performing such control, the insert is reliably inserted into the workpiece, and scratches such as abrasions are not caused on the surface because the buffer member 22a does not come into contact with the surface of the workpiece.

Specifically, the insertion time for each type of insert is stored in the storage device 14 in advance as described above. There are various types of inserts, but the time required for inserting the insert into the tapped hole of the workpiece (appropriately referred to as an "insertion time" below) is different for each insert. Therefore, the insertion time is calculated for each type of insert, and the information of the calculated insertion time is stored in the storage device 14.

Here, the insertion time is a time until the insert is inserted to a desired depth of the tapped hole, which is a time when the control device 16 receives a signal of the start of the rotation of the mandrel 23 from the input device 11 is set as an insertion start time. That is, when the insert is inserted in accordance with the insertion time, insertion failure that the insert is not inserted into the workpiece does not occur. Here, the term "insertion failure" includes not only a case where the insert is not completely embedded in the tapped hole but also a case where the insert is inserted into the tapped hole more deeply than necessary.

Then, the insertion time is calculated by the rotation speed of the insert inserting tool 1 and the insertion distance into the workpiece of the insert to be inserted into the workpiece. Alternatively, the insertion time may be calculated by measuring the time when the insertion is actually performed.

Note that the insertion time is calculated for each type of insert and the information regarding the insertion time is stored in the storage device 14 as described above, but for example, a storage device in which the information regarding the insertion time is stored in advance when the insert inserting tool 1 is manufactured is attached to the insert inserting tool 1.

Alternatively, the user may input the insertion time for each type of insert to the storage device 14 by using the second input device 11b, and the storage device 14 may store information regarding the insertion time for each type of insert.

Then, when the insert is inserted into the tapped hole, first, the insert is mounted on the mandrel 23 of the insert inserting tool 1 by the user. For example, the user grips the body unit 10, screws the insert into the male screw 32b of the mandrel 23 of the insertion unit 20 joined to the body unit 10, and mounts the insert on the tip portion of the insert inserting tool 1.

Then, the user selects the insertion time corresponding to the type of the insert mounted on the insert inserting tool 1 by using the second input device 11b. Here, information regarding the type of insert selected by selecting the type of insert mounted on the insert inserting tool 1, which is a target of insertion, is transmitted from the input device 11 to the control device 16, and the control device 16 accesses the storage device 14 based on the information to acquire information regarding the insertion time of the corresponding insert.

In this state, the user who grips the body unit 10 of the insert inserting tool 1 positions the insert inserting tool 1 at a position where the insert mounted on the tip portion of the mandrel 23 comes into contact with the edge of the tapped hole of the workpiece. In this state, when the user grips the first input device 11a, an input signal is transmitted to the control device 16, and a signal of the start of the rotation of the mandrel 23 is transmitted from the control device 16 to the drive control device 13.

The insertion unit 20 is automatically rotated by the drive device 21, and the insert mounted on the tip portion of the mandrel 23 is also rotated. Then, the insert is gradually screwed into the tapped hole while being rotated and is inserted (embedded).

The control device 16 sets, as the insertion start time, a time when the mandrel 23 starts rotation by gripping the first input device 11a by the user while the insert is brought into contact with the workpiece. Then, the control device 16 issues an instruction for the time measuring device 15 to measure the insertion time of the insert acquired from the storage device 14 in advance, with the insertion start time as a trigger.

Then, the time measuring device 15 measures the insertion time from the insertion start time set in advance in accordance with the type of the insert to be inserted into the workpiece, and transmits a notification signal indicating that the measured time has elapsed to the control device 16. When the control device 16 receives the information of the elapse of the insertion time from the time measuring device 15, the control device 16 transmits a signal for stopping the rotation of the mandrel 23 to the drive control device 13, and ends the insertion operation of the insert into the workpiece.

### [Operation]

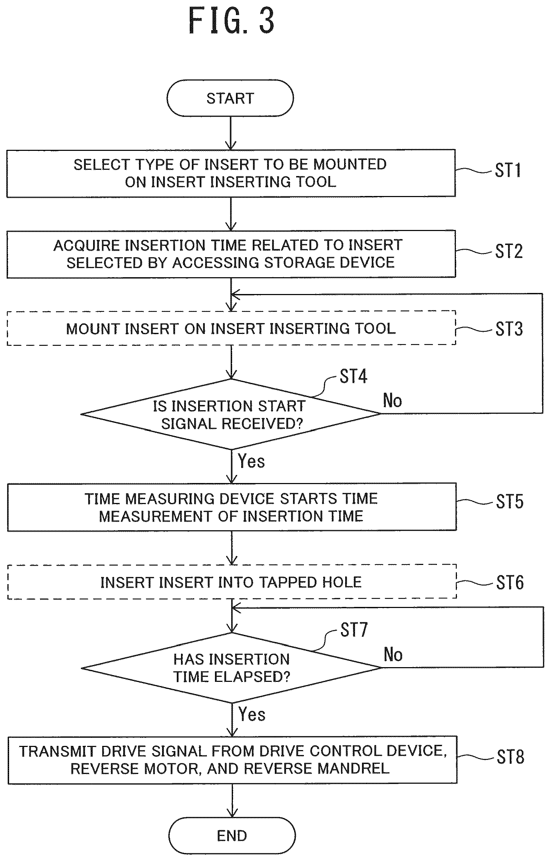

Next, a flow of control when the insert is inserted by using the insert inserting tool 1 in the embodiment of the present invention will be described with reference to FIG. 3. FIG. 3 is a flowchart illustrating a flow of insertion of the insert into the workpiece using the insert inserting tool 1 according to the first embodiment of the present invention.

First, the type of insert that is an insert to be inserted into the tapped hole of a workpiece and is mounted on the insert inserting tool 1 is selected (ST1). The user operates the second input device 11b while viewing the notification device 12 to select the corresponding insert, for example. Information regarding the selected insert is transmitted from the input device 11 to the control device 16 via the bus B.

The control device 16 accesses the storage device 14 based on the received information regarding the type of insert to acquire the insertion time related to the corresponding insert (ST2). The user mounts the insert on the insert inserting tool 1 (ST3).

Note that the processing of Step ST3 is not the processing of the insert inserting tool 1 but is the processing performed by the user. Thus, the processing of Step ST3 is illustrated by being surrounded by a broken line in the flowchart illustrated in FIG. 3. In addition, the reason why the processing performed by the user is also illustrated together with the processing of the insert inserting tool 1 is that the flow of inserting the insert into the workpiece, that is, the flow of controlling the insert inserting tool 1 is easy to understand. Therefore, the step numbers indicating the processing order are illustrated as a series of flow without distinguishing between the operation of the user and the flow of the control in the insert inserting tool 1.

In addition, here, the selection of the type of the insert, the setting of the insertion time, and the order of mounting of the insert on the insert inserting tool 1 have been described in the above-described order, but the processing such as the selection of the type of the insert may be performed after the mounting of the insert is completed.

The control device 16 determines whether or not the signal of the insertion start has been received (ST4). The determination is made based on whether or not a signal for gripping the first input device 11a by the user and starting the rotation of the mandrel 23 is received by the control device 16.

In a case where the mandrel 23 does not start rotating, this indicates that the insertion of the insert into the workpiece has not started, and the control device 16 continues to be in the waiting state (NO in ST4). On the other hand, in a case where the control device 16 determines that the user has brought the insert into contact with the workpiece and started the rotation of the mandrel 23 (YES in ST4), an instruction to measure the insertion time is transmitted from the control device 16 to the time measuring device 15, and the time measuring device 15 starts measuring the insertion time of the insert acquired by the control device 16 (ST5).

The user inserts the insert into the tapped hole of the workpiece while rotating the insert (ST6). The insert is gradually screwed from the surface side of the workpiece of the tapped hole toward the inner side.

The control device 16 determines whether or not the insertion time has elapsed (ST7). Specifically, it is confirmed whether or not a notification signal indicating that the insertion time has elapsed is received from the time measuring device 15. Then, during a period in which the signal from the time measuring device 15 is not received, the driving force is continuously applied to the mandrel 23 via the drive control device 13 to rotate the mandrel 23 and insert the insert into the tapped hole (NO in ST7).

On the other hand, in a case where the notification signal indicating that the insertion time has elapsed is received from the time measuring device 15 (YES in ST7), the control device 16 transmits a signal for reversing the rotation to the drive device 21 from the drive control device 13 and reverses the mandrel 23 (ST8).

That is, as the insertion time elapses, the insert is inserted into the tapped hole to a desired depth, and further insertion is not necessary. Therefore, the rotation of the mandrel 23 is reversed when the insertion time has elapsed.

As a result, the mandrel 23 moves upward from the workpiece together with the insert inserting tool in a state of leaving the insert inside the tapped hole, and the insertion processing of the insert into the workpiece by the insert inserting tool 1 is ended.

With the insert inserting tool and the control method for an insert inserting tool as described above, it is possible to prevent scratches such as abrasions on a workpiece when an insert is inserted into the workpiece and to homogeneously and efficiently insert the insert into the workpiece even in a case where a large number of inserts having different types are inserted.

In particular, regarding the insertion of the insert into the tapped hole, the insertion time corresponding to the type of the insert is set, and the rotation of the mandrel is controlled based on the insertion time. Thus, it is possible to prevent the insert from coming into contact with the surface of the workpiece and cause scratches such as abrasions.

Note that, in the above description of the first embodiment of the present invention, it is premised that the trigger of the signal of the start of the rotation of the mandrel 23 is generated by the user gripping the first input device 11a with a hand, but for example, another input device such as a foot switch may be used.

Similarly, in the insert inserting tool 1 in the embodiment of the present invention, it is premised that the control device 16 is disposed in the insert inserting tool 1, but the control device may be a device different from the insert inserting tool. In this case, for example, information regarding the insertion time corresponding to the type of the insert is stored in the control device, and the user selects the type of the insert in the control device, so that a control signal is transmitted from the control device to the insert inserting tool via the connection portion, and the control is performed.

In addition, the insert can be mounted on the insert inserting tool by using an insert alignment device or the like instead of the user mounting the insert on the insert inserting tool by hand. In this case, the insertion start time of the insert into the tapped hole of the workpiece may be set in accordance with the movement of the insert inserting tool.

That is, for example, the insert aligned in the insert alignment device is mounted, and is once raised and moved to the workpiece. Then, the insert is lowered to the vicinity of the tapped hole, and a time set as the lowering time has elapsed can be set as the insertion start time of the insert into the tapped hole.

### (Second Embodiment)

Next, a second embodiment of the present invention will be described. Note that, in the second embodiment, the same components as the components described in the first embodiment are denoted by the same reference signs, and the description of the same components will not be repeated.

In the first embodiment described above, when the insert is inserted into the workpiece by using the insert inserting tool 1, scratches such as abrasions are prevented from being made on the workpiece by managing the insertion time. On the other hand, in a control method for the insert inserting tool in the second embodiment, a method for managing an insertion distance of the insert into the workpiece is adopted as a method for inserting the insert into the workpiece without a portion of the insertion unit 20 including the mandrel 23 being brought into contact with the workpiece, when the insert is inserted into the workpiece.

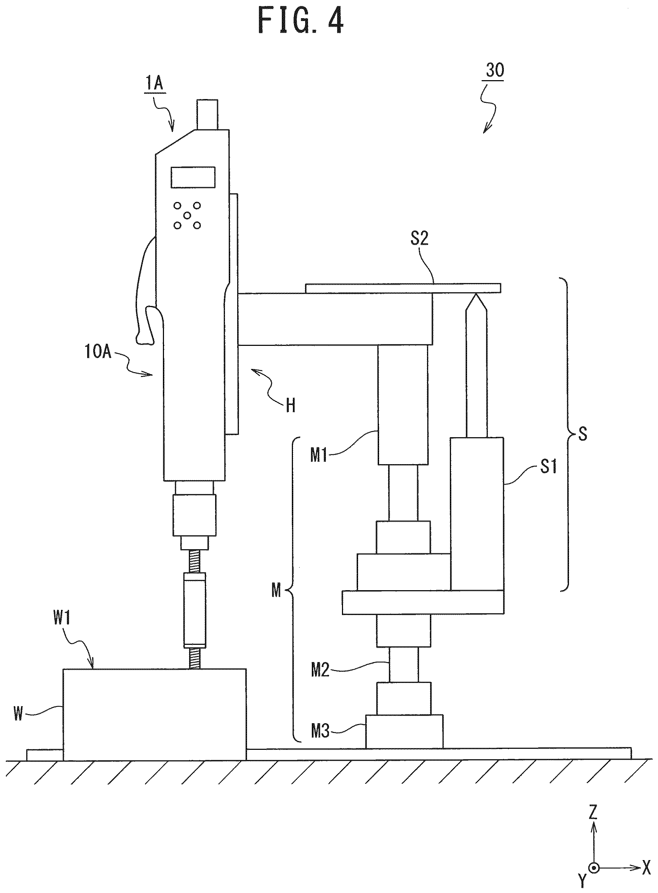

Here, FIG. 4 is a schematic view illustrating an overall configuration of an insert insertion apparatus 30 including an insert inserting tool 1A according to the second embodiment of the present invention. The insert insertion apparatus 30 is configured as an apparatus capable of automatically inserting an insert into a workpiece W by using the insert inserting tool 1A.

Note that, in FIG. 4, a plane on which the insert insertion apparatus 30 and the workpiece W are placed is set as an X-Y plane indicated by an X-direction and the Y-direction. Then, a height direction that is a direction perpendicular to the X-Y plane is set as a Z-direction.

The insert insertion apparatus 30 illustrated in FIG. 4 is placed on a desk or a work table, for example. Here, the plane on which the insert insertion apparatus 30 is placed is the X-Y plane, and the workpiece W is also placed on the same plane. However, the placement surface of the insert insertion apparatus 30 and the placement surface of the workpiece W may not be placed on the same plane.

The insert insertion apparatus 30 includes the insert inserting tool 1A and a moving mechanism M for moving the insert inserting tool 1A in three directions of X, Y, and Z. Further, a detection sensor S that detects a moving distance of the insert inserting tool 1A in the Z-direction is also provided.

The insert inserting tool 1A is attached to the moving mechanism M via a fixing device H. The moving mechanism M includes a Z-direction moving portion M1 joined to the fixing device H, a Y-direction moving portion M2 that is joined to the Z-direction moving portion M1 and moves the insert inserting tool 1A in the Y-direction, and an X-direction moving portion M3 that is joined to the Y-direction moving portion M2 and moves the insert inserting tool 1A in the X-direction.

In the moving mechanism M in the insert insertion apparatus 30, the Z-direction moving portion M1, the Y-direction moving portion M2, and the X-direction moving portion M3 are disposed from the top to the bottom in the Z-direction, and the X-direction moving portion M3 is in contact with the X-Y plane on which the insert insertion apparatus 30 is placed.

Therefore, by moving each portion of the moving mechanism M, the insert inserting tool 1A fixed to the moving mechanism M via the fixing device H can be moved in any one of three directions of X, Y, and Z.

Then, when the insert inserting tool 1A is moved, the movement positions in the three directions of X, Y, and Z described above are set in advance as coordinates. Therefore, for example, the position of the tapped hole when the insert is inserted into the workpiece W is set as coordinates. In addition, in a case where an insert alignment device is used, the position of each alignment hole in which the insert is aligned in order to mount the insert on the insert inserting tool 1A may be set as coordinates.

Note that, a method (structure) of moving the insert inserting tool 1A in each direction in the moving mechanism M may be any method such as a rack and pinion. In addition, each portion such as the Z-direction moving portion M1 is disposed at the above-described position, but is not necessarily limited to such a disposition position.

For example, regarding the disposition positions of the Y-direction moving portion M2 and the X-direction moving portion M3, the X-direction moving portion M3 may be disposed above the Y-direction moving portion M2 in the Z-direction. In addition, the entire structure of the moving mechanism M may be sufficient as long as the structure is suitable for the disposition positions of the respective portions.

The structure of the insert inserting tool 1A is substantially the same as the insert inserting tool 1 in the first embodiment described above. However, since the entire insert insertion apparatus 30 including the moving mechanism M and the detection sensor S described above is controlled, the configuration of a body unit 10A is different from the body unit 10 in the first embodiment.

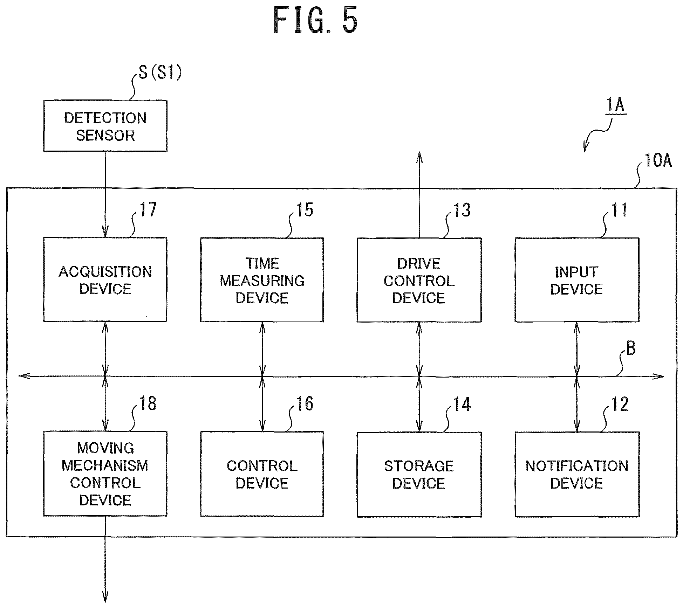

FIG. 5 is a block diagram particularly illustrating the inside of the body unit 10A in the configuration of the insert inserting tool 1A according to the second embodiment of the present invention. In the body unit 10A, an input device 11, a notification device 12, a drive control device 13, a storage device 14, a time measuring device 15, and a control device 16 are provided. These devices have the same internal configuration as the body unit 10 of the insert inserting tool 1 in the first embodiment, and the functions of each portion are as described above.

In the body unit 10A, an acquisition device 17 and a moving mechanism control device 18 are further provided. The acquisition device 17 acquires information regarding a distance detected by the detection sensor S. Here, the "information regarding the distance" is a moving distance in a downward direction in the Z-direction when the insert is inserted into the workpiece W.

As described above, when the insert is inserted into the workpiece, the insert is mounted on the tip of the insert inserting tool 1A, and one end portion of the insert is screwed into the tapped hole formed in the workpiece W. Therefore, in the insertion, first, one end portion of the insert comes into contact with a surface W1 of the workpiece W in which the tapped hole is formed.

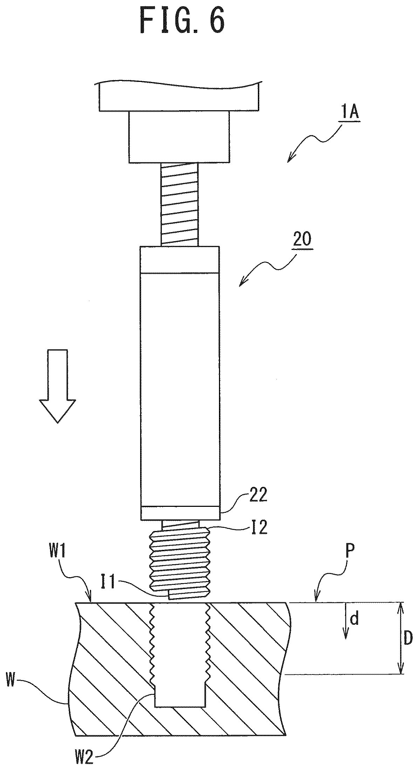

Here, FIG. 6 is an explanatory view illustrating an enlarged view of an insertion unit 20 including a mandrel 23 of the insert inserting tool 1A according to the second embodiment of the present invention and a portion of the workpiece W. FIG. 6 illustrates a state in which one end portion I1 of an insert I mounted on the mandrel 23 is in contact with a tapped hole W2 formed to be open to the surface W1 of the workpiece W.

As described above, the position where one end portion I1 of the insert I comes into contact with the workpiece W (tapped hole W2) corresponds to a position that is a starting point of a distance managed when the insert I is inserted into the workpiece W. Therefore, this position is appropriately referred to as a "reference position P" below.

As described above, when the insert inserting tool 1A is moved, the position of the workpiece W (tapped hole W2) into which the insert I is inserted is set in advance as the respective coordinates of X, Y, and Z. Therefore, it can be said that the "reference position P" is a position where the insert inserting tool 1A on which the insert I is mounted is moved, and the position is set in advance as coordinates.

The insert I is screwed into the tapped hole W2 in the Z-direction downward from this state, whereby the insert I is inserted into the workpiece W. However, in the insertion, it is required that the insert I is screwed in (disposed) at an appropriate position inside the tapped hole W2.

That is, when a state in which the insert I is more deeply screwed into the tapped hole W2 than necessary occurs in a case where the insert I is inserted into the workpiece W, there is a possibility that, for example, a buffer member 22a of the insert inserting tool 1A comes into contact with the surface W1 of the workpiece W. On the other hand, when an insertion distance of the insert I into the tapped hole W2 is shorter than the setting, the other end portion I2 of the insert I protrudes above the surface W1 of the workpiece W in the Z-direction. In such a state, various inconveniences may occur, such as the function as the insert I not being exhibited at all. Therefore, it is necessary to avoid the occurrence of such a situation.

Therefore, in the second embodiment of the present invention, as one of the methods of inserting the insert I into the workpiece W without bringing the portion of the insertion unit 20 including the mandrel 23 into contact with the workpiece W, a method for managing the insertion based on the distance when the insert I is inserted into the tapped hole W2 of the workpiece W is adopted.

Therefore, it is necessary to ascertain how far the insert I is inserted into the tapped hole W2. Therefore, as a position as a reference, a position where one end portion I1 of the insert I comes into contact with the workpiece W, that is, a position set as coordinates of a movement destination of the insert inserting tool 1A is set as the reference position P as described above. When control is performed such that the insert I is inserted by a set distance D set in advance as a distance for inserting the insert I into the tapped hole W2 by using the position of the reference position P as "zero", the insert I can be inserted to a desired position of the workpiece W.

However, since the insert I is used by being embedded in the workpiece W, it is difficult to directly detect the insertion distance of the insert I to be embedded. Thus, in the control method for the insert inserting tool 1A in the second embodiment of the present invention, instead of detecting the distance at which the insert I is inserted into the workpiece W, the moving distance of the insert inserting tool 1A when the insert I is inserted into the workpiece W is handled as the insertion distance of the insert I.

Note that, the distance set in advance for embedding the insert I in the workpiece W is referred to as a "set distance D" below. On the other hand, a moving distance of the insert inserting tool 1A when the insert I is inserted into the workpiece W described above, that is, a distance at which the insert I is inserted into the tapped hole W2 is referred to as an "insertion distance d". Therefore, the insertion distance d is finally set to a value equal to the set distance D. In addition, the insertion distance d is a value that changes with the movement of the insert inserting tool 1A since the insertion distance d corresponds to a distance at which the insert I moves downward in the Z-direction when the insert I is screwed into the tapped hole W2.

In addition, here, the set distance D that is finally set as the distance at which the insert I is inserted does not necessarily coincide with the depth from the surface W1 of the workpiece W when the tapped hole W2 is formed. This is because, for example, in a case where an insert with a tang is used, it is necessary to secure a space when the tang is folded off.

Then, in order to detect the insertion distance d, the detection sensor S is provided. As illustrated in FIG. 4, the detection sensor S includes a detection device S1 that detects a downward moving distance of the insert inserting tool 1A in the Z-direction, which is substituted for the insertion distance d of the insert I with respect to the workpiece W, and an action device S2 that operates the detection device S1.

The detection sensor S is provided to be able to follow the movement of the insert inserting tool 1A such that the downward moving distance of the insert inserting tool 1A in the Z-direction can be detected at any position in the X and Y-directions. Therefore, in the second embodiment of the present invention, the detection device S1 is disposed at a position parallel to the Z-direction moving portion M1.

In addition, the action device S2 is fixed to the fixing device H that joins the insert inserting tool 1A and the moving mechanism M. In the detection sensor S, the action device S2 is appropriately in contact with a tip of the detection device S1 in accordance with the movement of the insert inserting tool 1A in the Z-direction. A position where the action device S2 comes into contact with the tip of the detection device S1 corresponds to the reference position P.

In other words, as described above, the position at which the insertion of the insert I is started is set in advance as a position to which the insert inserting tool 1A is to be moved, and the coordinates are set. Then, since the coordinates correspond to the reference position P, the disposition position of the detection sensor S is set such that the action device S2 comes into contact with the tip of the detection device S1 when the insert inserting tool 1A reaches the reference position P.

Then, when one end portion I1 of the insert I comes into contact with the tapped hole W2, and then the insert inserting tool 1A is further moved downward in the Z-direction, the insert I is screwed into the tapped hole W2, and after the tip of the detection device S1 is also pushed downward in the Z-direction by the action device S2. As described above, since the "reference position P" is set to the distance zero, a distance (insertion distance d) at which the insert is inserted into the workpiece W is detected with reference to this position.

Note that the tapped hole W2 is a hole into which the insert I is inserted, and the tapped hole W2 is formed in the workpiece W in advance. However, for example, in a case where a plurality of tapped holes W2 is formed, the orientation of a screw hole cut particularly in the vicinity of the surface W1 of the workpiece W varies. On the other hand, the position of mounting start at which the insert I is mounted on the mandrel 23 is not determined, and the orientation of one end portion I1 of the insert I mounted on the mandrel 23 is not uniform.

Therefore, when one end portion I1 of the insert I comes into contact with the tapped hole W2 in a case where the insert I is screwed into the tapped hole W2, the orientation of the screw hole cut in the tapped hole W2 does not necessarily coincide with the orientation of the one end portion I1 of the insert I to be inserted. Therefore, it is conceivable that the time from when one end portion I1 of the insert I comes into contact with the tapped hole W2 until the insert I is actually screwed into the tapped hole W2 may vary for each insert I.

However, as described above, the insertion distance d when the insert I is inserted into the workpiece W is actually detected by the action device S2 pushing the detection device S1 downward in the Z-direction, after the insert I starts to be inserted into the tapped hole W2. That is, the detection sensor S detects the insertion distance d of the insert I after the orientation of the screw hole of the tapped hole W2 and the orientation of one end portion I1 of the insert I coincide with each other and the one end portion I1 starts to enter into the tapped hole W2.

Therefore, the insertion distance d is maintained zero until the one end portion I1 of the insert I actually enters into the tapped hole W2. Thus, the insertion distance d of the insert I is accurately detected by the detection sensor S regardless of the combination of the tapped hole W2 and the insert I.

The distance by which the tip of the detection device S1 is pushed is a downward moving distance of the insert inserting tool 1A in the Z-direction, and corresponds to the insertion distance d at which the insert I is inserted into the workpiece W. Then, information regarding the insertion distance d (the moving distance of the insert inserting tool 1A) of the insert I into the workpiece W, which is detected by the detection sensor S, is acquired by the acquisition device 17.

Specifically, the acquisition device 17 acquires, as information regarding the insertion distance d, a detection signal from the detection sensor S that has detected the insertion distance d at which the insert I is inserted into the workpiece W from the position of the reference position P. Then, it is determined whether or not the insertion distance d of the insert I into the workpiece W is inserted by the set distance D, by comparing the insertion distance d with the set distance D.

Note that the acquisition device 17 acquires the information of the insertion distance d from the detection sensor S at an interval set in advance. Therefore, for example, it is possible to acquire the movement of the detection sensor S of the detection device S1 in real time, or to set the acquisition at a predetermined interval.

In a case where the acquisition device 17 determines that the insertion distance d of the insert I has reached the set distance D, the drive control device 13 or the moving mechanism control device 18 is instructed to end the insertion operation of the insert I into the workpiece W. As a result, the insert I is not inserted into the workpiece W at a distance equal to or greater than the set distance D. Similarly, it is possible to reliably insert the insert into the workpiece W by the set distance D.

The moving mechanism control device 18 moves the insert inserting tool 1A by controlling the moving mechanism M such that the insert I is inserted into the tapped hole W2 as an insertion target by the set distance D based on the instruction of the control device 16.

### [Operation]

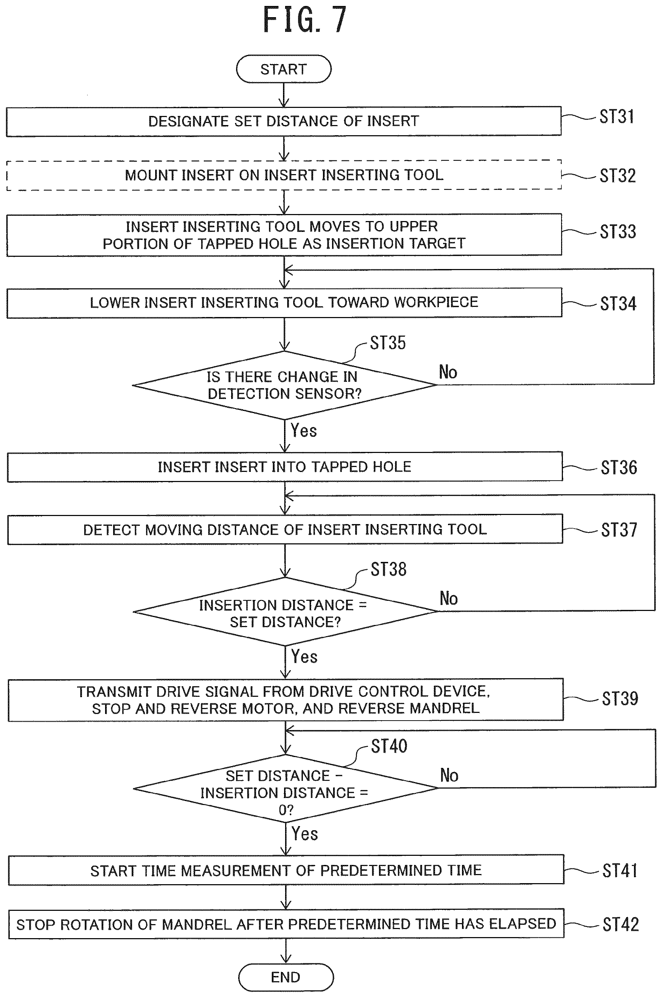

Next, a flow of control when the insert I is inserted by using the insert inserting tool 1 in the second embodiment of the present invention will be described with reference to FIG. 7 or the like. FIG. 7 is a flowchart illustrating a flow of inserting an insert into a workpiece W by using the insert inserting tool 1A according to the second embodiment of the present invention.

First, when the insert I is inserted into the tapped hole W2 of the workpiece W, the set distance D of the insert I is set (ST31). This is a numerical value that can be freely set regardless of the type of the insert. For example, the user inputs or selects the corresponding set distance D by operating the second input device 11b while viewing the notification device 12. Information regarding the set distance D input or the like is transmitted from the input device 11 to the control device 16 via the bus B.

The user mounts the insert I on the insert inserting tool 1 (ST32). Note that the processing of Step ST32 is not the processing of the insert inserting tool 1A but is the processing performed by the user. Thus, the processing of Step ST32 is illustrated by being surrounded by a broken line in the flowchart illustrated in FIG. 7. However, as described above, the insert I can be automatically mounted on the insert inserting tool 1A by using the insert alignment device.

In addition, the reason why the processing performed by the user is also illustrated together with the processing of the insert inserting tool 1 is that the flow of inserting the insert I into the workpiece W, that is, the flow of controlling the insert inserting tool 1A is easy to understand. Therefore, the step numbers indicating the processing order are illustrated as a series of flow without distinguishing between the operation of the user and the flow of the control in the insert inserting tool 1A.

After the user mounts the insert I on the mandrel 23, the insert inserting tool 1A moves to the upper portion of the tapped hole W2 as the insertion target (ST33). The insert inserting tool 1A is moved in a manner that the moving mechanism control device 18 controls the drive of the moving mechanism M to a position (reference position P) of coordinates set in advance, based on an instruction of the control device 16.

The control device 16 disposes the insert I to be inserted on the desired upper portion of the tapped hole W2, and then lowers the insert inserting tool 1A toward the workpiece W (ST34). As the insert inserting tool 1A moves downward in the Z-direction, the action device S2 is also lowered.

Note that, since the coordinates of the reference position P are set in advance, the insert inserting tool 1A does not need to be moved in a flow of first disposing the insert I at the upper portion of the tapped hole W2 and then lowering the insert inserting tool 1A, as described above. That is, the insert inserting tool 1A in the X-direction, the Y-direction, and the Z-direction may be moved at the same time. However, for convenience of description, it is assumed that the insert inserting tool 1A performs the movement illustrated in Step ST33 and Step ST34 described above.

For example, immediately after the start of lowering the insert inserting tool 1A, the insert I mounted on the mandrel 23 has not yet reached the position of the surface W1 of the workpiece W. Therefore, the lowering action device S2 has not yet come into contact with the tip of the detection device S1. Thus, the detection device S1 does not detect the insertion distance d of the insert I.

Note that, here, the state in which the insert I is not inserted into the workpiece W and the insertion distance d is not detected as described above is ascertained to be a state of the insertion distance d = the reference position P. That is, since the insert I does not move to the coordinate position set in advance, the insertion distance d of the insert I (the moving distance of the insert inserting tool 1A) maintains zero.

The acquisition device 17 receives information regarding the insertion distance d from the detection device S1. However, as described above, in a state in which the insert inserting tool 1A does not move to the reference position P, that is, until the action device S2 comes into contact with the detection device S1, the insertion distance d maintains zero, and there is no change in the insertion distance d. Thus, the acquisition device 17 determines whether or not there is a change in the insertion distance d acquired from the detection sensor S (ST35).

Then, until the insert inserting tool 1A reaches the reference position P and the action device S2 comes into contact with the detection device S1 to push the detection device S1, and thus a change in the insertion distance d occurs (NO in ST35), the processing returns to Step ST34, and the insert inserting tool 1A continues to be moved downward in the Z-direction.

When the insert inserting tool 1A continues to be lowered downward in the Z-direction, the action device S2 comes into contact with the tip of the detection device S1 at a certain position as indicated by an arrow in FIG. 6. The "certain position" is a position where one end portion of the insert mounted on the mandrel 23 is in contact with the surface W1 of the workpiece W, and is the above-described "reference position P".

When the insert inserting tool 1A is further moved downward in the Z-direction from this state, the detection device S1 is pushed by the action device S2. That is, since the insert inserting tool 1A moves downward in the Z-direction, the position relationship between the one end portion I1 of the insert I and the tapped hole W2, that is, the insertion distance d from the reference position P is changed (YES in ST35). Then, the detection device S1 is pushed downward in the Z-direction by the action device S2 in conjunction with this movement.

This state indicates that the insertion of the insert I into the tapped hole W2 is started (ST36), and the detection sensor S detects the moving distance of the insert inserting tool 1A (ST37). The acquisition device 17 acquires information of the insertion distance d from the detection sensor S and compares the moving distance (insertion distance d) of the insert inserting tool 1A detected by the detection sensor S with the set distance D set in advance (ST38).

As a result, in a case where the moving distance (insertion distance d) of the insert inserting tool 1A does not satisfy the set distance D (NO in ST38), the insert I is inserted into the tapped hole W2 by continuing to lower the insert inserting tool 1A.

On the other hand, in a case where it is determined that the moving distance (insertion distance d) of the insert inserting tool 1A acquired from the detection sensor S is equal to the set distance D (YES in ST38), the acquisition device 17 transmits the determination result to the control device 16.

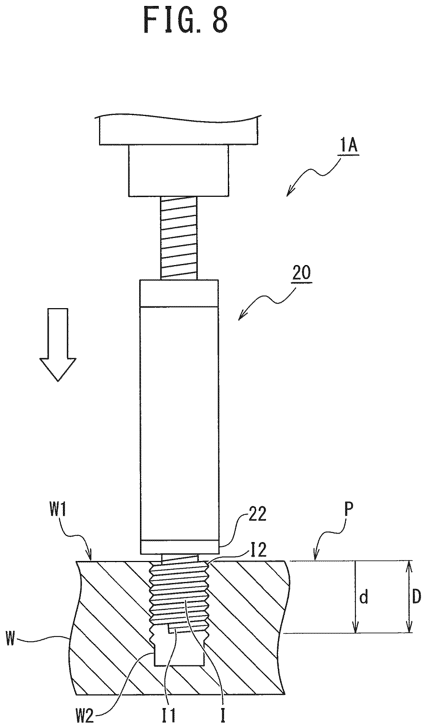

FIG. 8 illustrates this state. FIG. 8 is an explanatory view illustrating a state in which the insert inserting tool 1A inserts the insert I into the workpiece W (tapped hole W2) by the set distance D in the second embodiment of the present invention.

When the insert inserting tool 1A moves in a direction of the arrow illustrated in FIG. 8 and the insert I is inserted into the tapped hole W2 by the set distance D, the set distance D and the insertion distance d are equal to each other. Then, by controlling the insertion of the insert inserting tool 1A based on the insertion distance as described above, as illustrated in FIG. 8, the buffer member 22a does not come into contact with the surface W1 of the workpiece W, and it is possible to prevent scratches such as abrasions from being made on the surface W1.

The control device 16 that has received the instruction from the acquisition device 17 issues an instruction for the drive control device 13 to transmit a signal for reversing the rotation to the drive device 21. The drive device 21 stops a motor and further reverses the motor based on an instruction from the drive control device 13. As a result, the rotation of the mandrel 23 is reversed (ST39).

When the motor is reversed by the drive device 21, the insert inserting tool 1A gradually moves upward in the

Z-direction in a state in which the insert I remains in the workpiece W (tapped hole W2). As the insert inserting tool 1A moves upward in the Z-direction, the action device S2 is separated farther from the detection device S1. Thus, the value of the moving distance (insertion distance d) of the insert inserting tool 1A detected by the detection sensor S also changes.

The acquisition device 17 compares the moving distance (insertion distance d) of the insert inserting tool 1A acquired from the detection sensor S with the set distance D (ST40). Specifically, the moving distance (insertion distance d) is subtracted from the set distance D.

In a case where the moving distance (insertion distance d) is shorter than the set distance D (NO in ST40), the insert inserting tool 1A has not yet come out from the tapped hole W2 into which the insert I is screwed. In this case, the insert inserting tool 1A continues to move upward in the Z-direction. In addition, the detection sensor S also continues to detect the moving distance of the insert inserting tool 1A.

On the other hand, in a case where the acquisition device 17 determines that a difference between the moving distance and the insertion distance of the insert inserting tool 1A is zero (YES in ST40), the acquisition device 17 instructs the time measuring device 15 to start the time measurement (ST41). Here, the reason why the time measuring device 15 starts the time measurement is to stop the rotation of the mandrel 23 after a predetermined time has elapsed, after the insert inserting tool 1A is pulled up from the tapped hole W2.

The predetermined time is set in advance and is stored in the storage device 14, for example. The time measuring device 15 measures a predetermined time by using, as a trigger, that an instruction indicating the difference between the moving distance and the insertion distance is zero is received from the acquisition device 17. Then, when the predetermined time has elapsed, the drive control device 13 is instructed to stop the rotation of the mandrel 23 (ST42). As described above, the insertion processing of the insert into the workpiece W by the insert inserting tool 1A is ended.

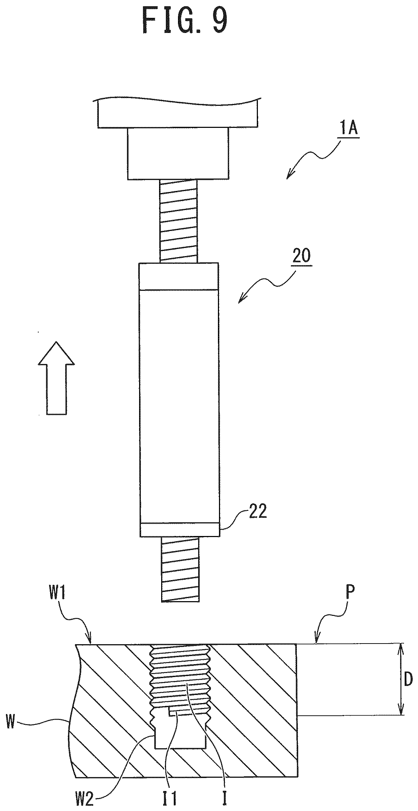

FIG. 9 is an explanatory view illustrating a state in which the insert inserting tool 1A is separated from the workpiece W and rotation of the mandrel 23 is stopped, in the second embodiment of the present invention. FIG. 9 illustrates a state in which the insert I is inserted into the tapped hole W2 of the workpiece W. In addition, as a result of moving in the orientation indicated by the upward arrow, the insert inserting tool 1A is located above the workpiece W, and the mandrel 23 is at a position sufficiently separated from the surface W1 of the workpiece W.

After the insert I is inserted into the workpiece W, the insertion processing of the insert I into another tapped hole W2 continues. Thus, after the insert I is inserted into the workpiece W, the rotation of the mandrel 23 is stopped when the mandrel 23 is sufficiently separated from the insert I. As a result, a new insert I can be mounted on the mandrel 23.

Note that, regarding the time of the time measurement by the time measuring device 15, for example, any time such as 0.5 seconds to 1 second can be set as the predetermined time.

With the insert inserting tool and the control method for an insert inserting tool as described above, it is possible to prevent scratches such as abrasions on a workpiece when an insert is inserted into the workpiece and to homogeneously and efficiently insert the insert into the workpiece even in a case where a large number of inserts having different types are inserted.

In particular, regarding the insertion of the insert into the tapped hole, the insertion distance of the insert is set in advance (set distance), and the insertion processing is performed while detecting the insertion distance of the insert into the tapped hole based on the set distance, and, the control is performed. In this manner, it is possible to prevent the insert from coming into contact with the surface of the workpiece and causing scratches such as abrasions.

Note that the present invention is not limited to the above-described embodiments, and is an example of the present invention. In the stage of implementation, the components can be modified and specified without departing from the gist, and various changes or improvements can be made to the above-described embodiment of implementation. In addition, various inventions can be formed by appropriately combining a plurality of components disclosed in the above-described embodiments.

For example, some components may be removed from all the components illustrated in the embodiments. Furthermore, components of different embodiments may be appropriately combined, and an aspect in which such changes or improvements are made may also be included in the present invention. The embodiments and the modifications are included in the scope and gist of the invention, and are included in the invention described in the claims and the equivalent scope thereof.

In the insert inserting tool 1A in the second embodiment of the present invention, it is premised that the control device 16, the acquisition device 17, and the moving mechanism control device 18 are disposed inside the insert inserting tool 1A. However, a control device can be provided separately from the insert inserting tool and the control device can perform these functions.

In addition, in the control of the insert inserting tool by the insertion distance of the insert in the second embodiment of the present invention, it is premised that the insertion distance can be set regardless of the type of the insert. However, for example, by associating the type of the insert and the insertion distance with each other, and selecting the type of insert, the insertion distance of the insert may be selected, and the control of inserting the insert into the workpiece W may be performed with the selected insertion distance.

Note that, as described above, as the detection sensor S, a sensor of a type that the action device S2 comes into contact with the detection device S1 to detect the distance by which the detection device S1 is moved is adopted. However, the detection sensor S of such a type is not limited, and a sensor capable of detecting the insertion distance of the insert can also be adopted by another method.

For example, when the insertion distance of the insert into the workpiece is detected, a contact position of one end portion of the insert with the workpiece as the reference position can also be detected by using a non-contact detection sensor. In this state, the moving distance of the insert inserting tool is further detected by using the non-contact detection sensor.

Note that, in a case where the operator manually inserts the insert into the workpiece by using, for example, the insert inserting tool illustrated in FIG. 1, the time when the operator grips the first input device and receives a signal of the start of the rotation of the mandrel from the first input device is set as the insertion start time. Alternatively, in a case where the insertion of the insert into the workpiece is controlled by using the insertion distance, similarly, the operator grips the first input device, and the insertion distance is detected by using, as the reference position, a place where the signal of the start of the rotation of the mandrel is received from the first input device.

In addition, in the past, regarding the control when the insert mounted on the insert inserting tool is inserted into the workpiece, an occurrence of a situation in which the insert inserting tool comes into contact with the surface of the workpiece and causes scratches on the surface is avoided by managing the insertion time or the insertion distance. However, the control is based on the premise that the insert is smoothly inserted into the workpiece after the insert is mounted on the insert inserting tool.

When the insert is inserted into the workpiece, the tapped hole provided in the workpiece is formed to have a diameter slightly smaller than the outer diameter of the insert to be inserted, as described above. Thus, when the insert is inserted into the tapped hole, the insert is inserted while cutting the inside of the tapped hole.

Thus, for example, when chips or the like during the insertion enter into a movable portion of the claw of the mandrel that fits into a portion of a notch of the tang-less insert, it is also conceivable that the claw is removed from the notch during the insertion of the tang-less insert into the tapped hole. In addition, when the insert is not smoothly inserted into the workpiece, particularly in a case where the insertion is controlled based on the insertion time, there may be a variation in the insertion even in the same insert.

Thus, after the insert is mounted on the insert inserting tool, a liquid is ejected from the outside of the insert toward the outer periphery of the insert. As a result, the sliding when the insert is inserted into the workpiece is improved, the resistance to insertion is reduced, and the chips and the like are unlikely to enter into the claws of the mandrel. In addition, the chips are easily removed even in a case where the chips and the like have been entered into the claws.

By ejecting a liquid toward the outer periphery of the insert as described above, it is possible to more smoothly perform the insertion into the workpiece. Thus, it is possible to perform the control when the insert is inserted into the workpiece based on the more reliable management of the insertion time or the insertion distance.

Note that, here, examples of the liquid to be ejected to the insert can include alcohol. In addition, a liquid other than alcohol may be used as long as the liquid evaporates after the insertion and does not remain in the workpiece, and for example, the viscosity and the like can be freely set.

### Reference Signs List

1: insert inserting tool
10: body unit
10a: connection portion
11: input device
11a: first input device
11b: second input device
12: notification device
13: drive control device
14: storage device
15: time measuring device
16: control device
17: acquisition device
18: moving mechanism control device
20: insertion unit
21: drive device
22: housing
22a: buffer member
23: mandrel
24: fixing member
H: fixing device
M: moving mechanism
M1: Z-direction moving portion
M2: X-direction moving portion
M3: Y-direction moving portion
S: detection sensor
S1: detection device
S2: action device

## Claims

1. An insert inserting tool comprising:
a mandrel on which an insert is mounted;
an input device configured to input a signal of start of rotation of the mandrel when the insert is inserted into a workpiece; and
a control device configured to control the rotation of the mandrel,
wherein the control device performs control such that the insert is inserted into the workpiece without bringing a portion of an insertion unit including the mandrel into contact with the workpiece, when the insert is inserted into the workpiece.

2. The insert inserting tool according to claim 1, wherein, in a case where a time when the signal of the start of the rotation of the mandrel is received from the input device is set as an insertion start time when the insert is inserted into the workpiece, the control device ends an insertion operation of the insert into the workpiece when an insertion time from the insertion start time set in advance in accordance with a type of the insert to be inserted into the workpiece has elapsed.

3. The insert inserting tool according to claim 2, further comprising:
a time measuring device,
wherein the control device performs control such that the rotation of the mandrel is reversed based on a notification signal for informing of elapse of the insertion time by which the time measuring device starts measurement from the insertion start time.

4. The insert inserting tool according to claim 2 or 3, wherein the insertion time is calculated by a rotation speed of the insert inserting tool and an insertion distance into the workpiece of the insert to be inserted into the workpiece, and is stored in advance in a storage device for each type of the insert.

5. The insert inserting tool according to claim 1, wherein, in a case where a contact position of one end portion of the insert with the workpiece is set as a reference position, when the insert is inserted into the workpiece, the control device acquires a detection signal from a detection sensor configured to detect a distance by which the insert is inserted into the workpiece from the reference position, and ends an insertion operation of the insert into the workpiece in a case where it is determined that the distance reaches an insertion distance set in advance.

6. The insert inserting tool according to claim 5, wherein the control device performs control to reverse the rotation of the mandrel in a case where it is determined that the insert is inserted into the workpiece from the reference position up to the insertion distance set in advance, based on the detection signal from the detection sensor.

7. A control method for an insert inserting tool, the method comprising:
mounting an insert on an insert inserting tool; and
inserting the mounted insert into a workpiece,
wherein, when the insert is inserted into the workpiece, a control is performed such that the insert is inserted into the workpiece without bringing a portion of an insertion unit including the mandrel into contact with the workpiece.

8. The control method for an insert inserting tool according to claim 7, wherein, in a case where a time when a signal of the start of the rotation of the mandrel is received from the input device is set as an insertion start time when the insert is inserted into the workpiece, an insertion of the insert into the workpiece is ended when an insertion time from the insertion start time set in advance in accordance with the type of the insert to be inserted into the workpiece has elapsed.

9. The control method for an insert inserting tool according to claim 8, wherein, in a case where the elapse of the insertion time is confirmed, insertion into the workpiece is ended by reversing the mandrel of the insert inserting tool, and the insert inserting tool is pulled up from the workpiece.

10. The control method for an insert inserting tool according to claim 7, wherein, in a case where a contact position of one end portion of the insert with the workpiece is set as a reference position when the insert is inserted into the workpiece, a detection signal from a detection sensor configured to detect a distance by which the insert is inserted into the workpiece from the reference position is acquired, and an insertion operation of the insert into the workpiece is ended, in a case where it is determined that the distance reaches an insertion distance set in advance.

11. The control method for an insert inserting tool according to claim 10, wherein, in a case where it is determined that the insert is inserted into the workpiece from the reference position up to the insertion distance set in advance, based on the detection signal from the detection sensor, insertion into the workpiece is ended by reversing the rotation of the mandrel, and the insert inserting tool is pulled up from the workpiece by the insertion distance set in advance.
